# EUROPEAN PATENT APPLICATION

(11) **EP 1 745 686 A1**
(43) Date of publication of application: **24.01.2007**
(21) Application number: 06425488.1
(22) Date of filing: 14.07.2006
(51) Int. Cl.: A01D 34/00

(54) **Automatic lawn mower**

(30) Priority: 22.07.2005 IT FI20050162
(71) Applicant: Bernini, Fabrizio, 52020 Mercatale Valdarno (IT)
(72) Inventor: Bernini, Fabrizio, 52020 Mercatale Valdarno (IT)
(74) Representative: Lanzoni, Luciano

(57) **Abstract**

Automatic lawn mower comprising: a box-shaped body (2) having two pairs of wheels (3,4) associated with the bottom of the two sides of the same body (2) to move said lawn mower along a grass surface to be cut; means (6) for driving said pairs of wheels (3,4) and disposed in said box-shaped body (2); a cutting member (18) associated with the bottom of said body (2) and movable for cutting said grass surface; wherein each pair of wheels (3,4) is associated with said driving means (6) to be motor-driven independently.

## Description

The present invention relates to an automatic lawn mower.

In particular, the present invention refers to a lawn mower for domestic use and of automatic type, that is, able to operate autonomously onto a grass surface to be cut.

Automatic lawn mowers are known to be generally provided with a box-shaped body supported by two rear driving wheels and two front idly-mounted wheels. Housed inside the box-shaped body are two electric motors, each of which operatively connected to a respective rear driving wheel. The motors are in turn powered by respective electric batteries which can be recharged when the lawn mower is not in use. The front wheels are smaller than the rear ones to allow a greater mobility of the box-shaped body, and are pivoted for rotation on the body to be free to rotate about a vertical axis. In this way, the box-shaped body can be moved in any direction by rotating the two driving wheels at different velocity. The lawn mowers further exhibit a cutting member consisting of a blade rotating between the front and rear wheels, and disposed below the box-shaped body. The cutting blade is formed by a lamina substantially star-shaped and rotating through a respective electric motor about a vertical axis. Moreover, the blade can be adjustably moved close to and away from the grass surface to make cuts of different height.

The electric motor of the cutting blade is also housed within the box-shaped body and suitably fed by a respective electric rechargeable battery.

The automatic lawn mowers are also provided with a programmable logical unit which operates the electric motors connected to the driving wheels and to the cutting blade. In this way, the lawn mowers, when suitably programmed, can ride along the surface to be cut without any intervention by the operator who, in case of the traditional lawn mowers, provides for guiding the box-shaped body along the surface to be cut.

The automatic lawn mowers are also provided with respective positioning sensors allowing to steer clear of possible obstacles located on the surface to be cut and to provide for a repositioning thereof at a rest station. The rest station is provided with electric connectors connected to the domestic distributing main, and able to be applied to the batteries disposed inside the box-shaped body.

In this way, when the batteries must be recharged, the lawn mower position itself to the respective rest station by associating the electric contacts of the batteries with the said electric connectors.

The automatic lawn mowers, roughly described above, exhibit, however, major drawbacks.

A first drawback is due to the dimensions of the box-shaped body that has to hold the said motors, feeding batteries and driving wheels. Actually, it is to be noted that the front wheels, in order to rotate about their respective vertical axis, need a free range of action in order not to interfere with other members of the box-shaped members. Consequently, the box-shaped body must be sufficiently bulky to allow the front wheels to be spaced from the members held in the same box-shaped body.

A further major drawback is given by the fact that the known lawn mowers have several operation limits derived from the conformation of the grass surface to be cut. In fact, in case of impervious or loose surfaces, the front wheels are affected by the irregularity of such surfaces that make the same wheels vibrate during the movement thereof.

It also to be stressed that the front wheels, non-motor driven, are unable to overcome obstacles unless these are of minimum size, such as stones of small dimensions. Consequently, in case the grass surface exhibits a greater roughness, the lawn mower is unable to complete its programmed path by leaving some surface spots uncut.

Again, in case of inclined grass surfaces, such as in mountainous or hilly regions, the lawn mowers do not possess the necessary stability to properly carry out the cutting of the grass. In case of a surface having a steep incline, the lawn mowers may also exhibit limits of movement and caused to turn over.

In this context, the specific technical task of the present invention is to propose an automatic lawn mower which does not exhibit the above drawbacks.

In particular, it is the object of the present invention to provide an automatic lawn mower of most limited dimensions.

A further object of the present invention is to propose an automatic lawn mower that can be used also on impervious and inclined surfaces.

The technical task and the specified objects are substantially obtained by providing an automatic lawn mower comprising the technical characteristics set forth in one or more of the appended claims.

Further characteristics and advantages of the present invention will appear more clearly from the following indicative, and thus non-limiting, description of a preferred, but non-exclusive, embodiment of the invention, as illustrated in the accompanying drawings, in which:

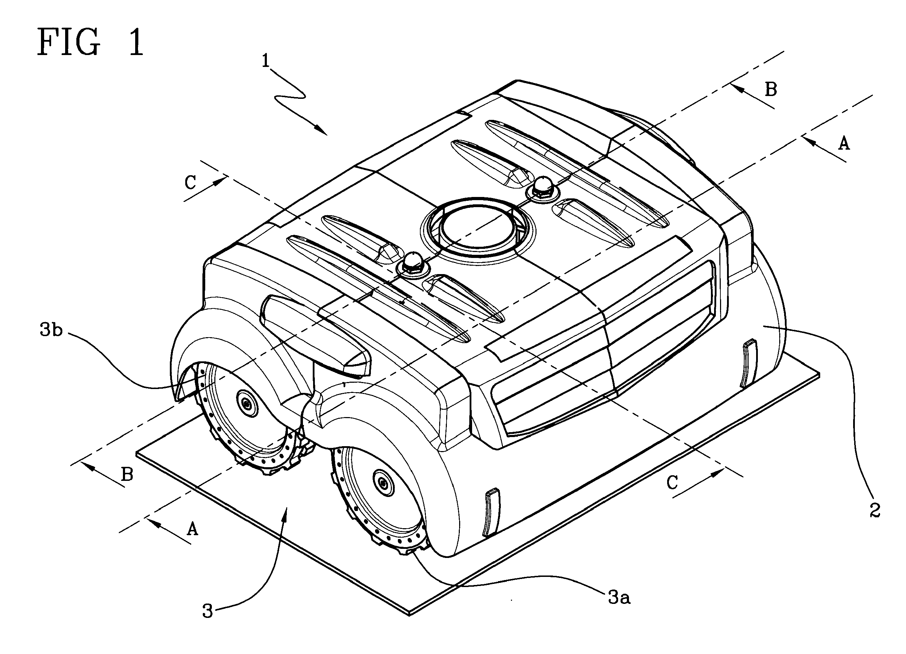

- Fig. 1 is a perspective view of the automatic lawn mower according to the present invention;
- Fig. 2 is a perspective views of the lawn mower of Fig. 1 with some parts taken away to allow a better illustration of others;
- Fig. 3 is a front elevation view, sectioned on line A-A of Fig. 1, of the lawn mower according to the present invention;
- Fig. 4 is a front elevation view, sectioned on line B-B of Fig. 1, of the lawn mower according to the present invention;
- Fig. 5 is a side elevation view, sectioned on line C-C of Fig. 1, of the lawn mower according to the present invention; and
- Figs. 6a to 6c are respectively a perspective view from above, a perspective view from below, and a front or rear view of a modular embodiment of the invention.

With reference to the attached figures, numeral 1 indicates the whole of an automatic lawn mower according to the present invention. It is to be specified that in the present description reference will be made exclusively to an automatic lawn mower, that is, a lawn mower able to autonomously move along the grass surface to be cut without being driven manually by an operator.

The lawn mower has a body 2 of substantially parallelepiped box shape and defines there inside a containment chamber 2a.

The box-shaped body 2 is provided with a plurality of wheels 3a, 3b, 4a, 4b which are associated at the bottom with the same body 2 to support it and move it along the grass surface to be cut.

In particular, the containment body 2 has a first pair and a second pair of driving wheels 3, 4 each of which disposed in correspondence of a respective side portion 5 of the box-shaped body 2. In other words, each pair 3, 4 is laterally associated with the box-shaped body 2 and exhibits first wheels 3a, 4a and second wheels 3b, 4b rotating about respective axes parallel to each other.

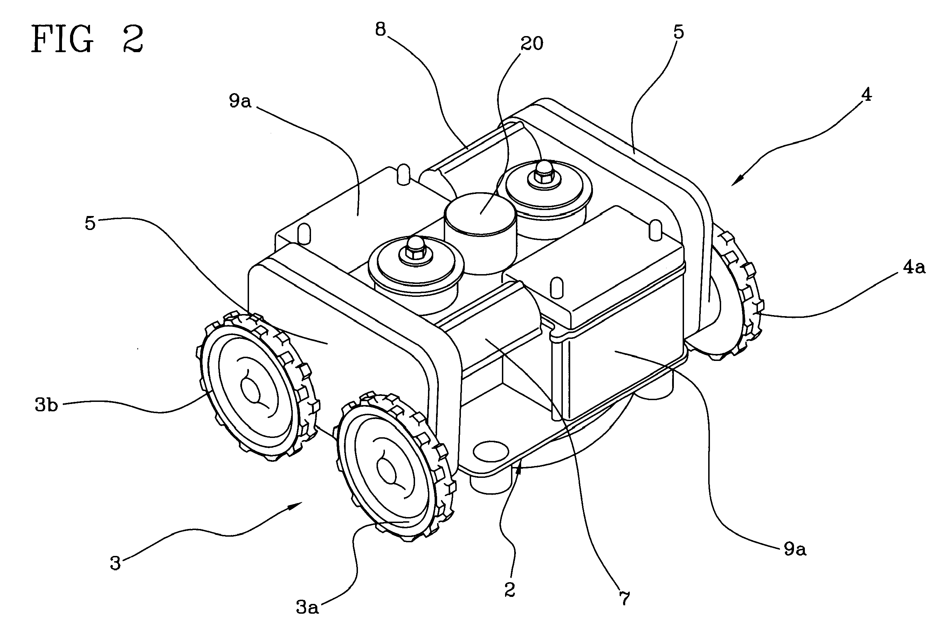

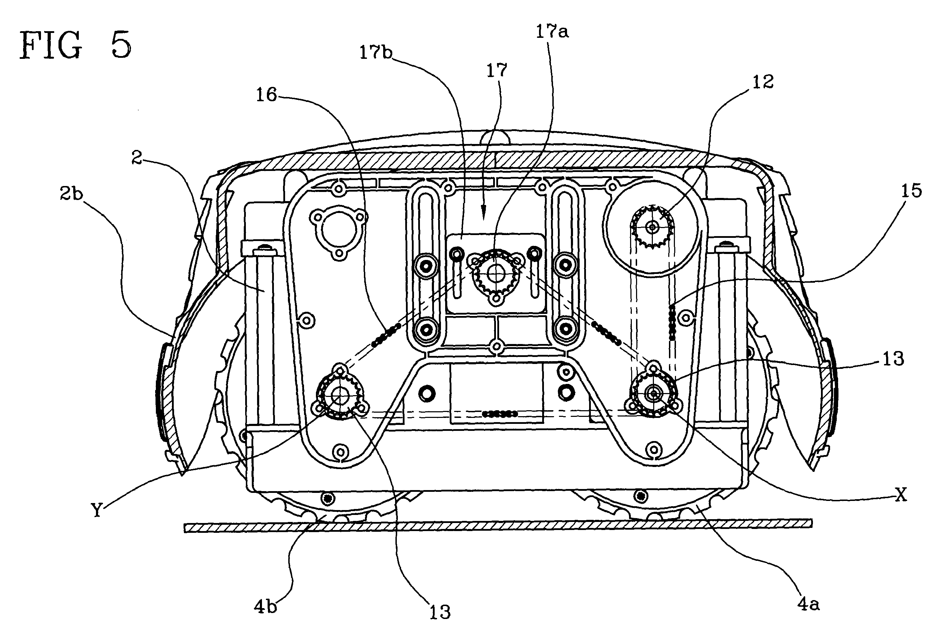

In this situation, as best visible in Fig. 2, the pairs of wheels 3, 4 are disposed symmetrically to each other. In particular, the first wheels 3a, 4a of the first and second pairs 3, 4 rotate about a first common axis X, and the second wheels 3b, 4b of each pair rotate about a second common axis Y (Fig. 5).

Advantageously, the first and second wheels 3a, 3b, 4a, 4b have the same dimension and are preferably provided with a toothed tread for a greater adhesion with the grass surface to be cut.

Preferably, a guard develops above the box-shaped body 2 for covering and concealing the box-shaped body 2 and, at least partially, the wheels of each pair 3, 4.

The lawn mower 1 is also provided with means 6 for driving the wheels 3a, 3b, 4a, 4b housed in the containment chamber 2a of the box-shaped body 2.

Advantageously, as will be best described later on, each wheel 3a, 3b, 4a, 4b is associated with the driving means 6 to result motor-driven.

The driving means 6 have a first and second electric motors 7, 8 each of which is associated with a respective pair of wheels 3, 4. In particular, the first motor 7 drives the first pair of wheels 3, while the second motor 8 drives the second pair 4.

In particular, each electric motor 7, 8, which is of known type and, therefore, not to be described herein in greater details, exhibits a rotary shaft 7a, 8a having a longitudinal development parallel to the rotation axes X, Y of the wheels.

In this situation, the shaft 7a of the first motor 7 is located above the first wheel 3a of the first pair 3, while the shaft 8a of the second motor 8 is located above the second wheel 4b of the second pair 4. In other words, as best illustrated in Fig. 2, the shafts 7a, 8a and respective motors 7, 8 develop along longitudinally parallel axes so as to be spaced apart.

The first and second motors 7, 8 are also associated with feeding means 9 also housed in the containment chamber 2a of body 2.

In particular, the feeding means 9 comprise a pair of electric batteries 9a of known type - not to be described in grater detail - each of which is associated with a respective motor 7, 8.

As illustrated in Fig. 2, the said batteries 9a - advantageously of rechargeable type via suitable electric connectors - are moved close to the respective electric motors 7, 8 in alternate fashion. In other words, the battery of the first electric motor 7 is positioned in correspondence of the first wheel 4a of the second pair 4, whereas the battery 9a of the second electric motor 8 is disposed in correspondence of the second wheel 3b of the first pair 3.

The lawn mower 1 also exhibits a first and second transmission members 10, 11 to associate the said motors 7, 8 with the respective wheels 3, 4.

In particular, the first transmission member 10 is associated with the first and second wheels 3a, 3b of the first pair 3 and with the first motor 7, whereas the second transmission member 11 is associated with the first and second wheels 4a, 4b of the second pair 4 and with the second motor 8.

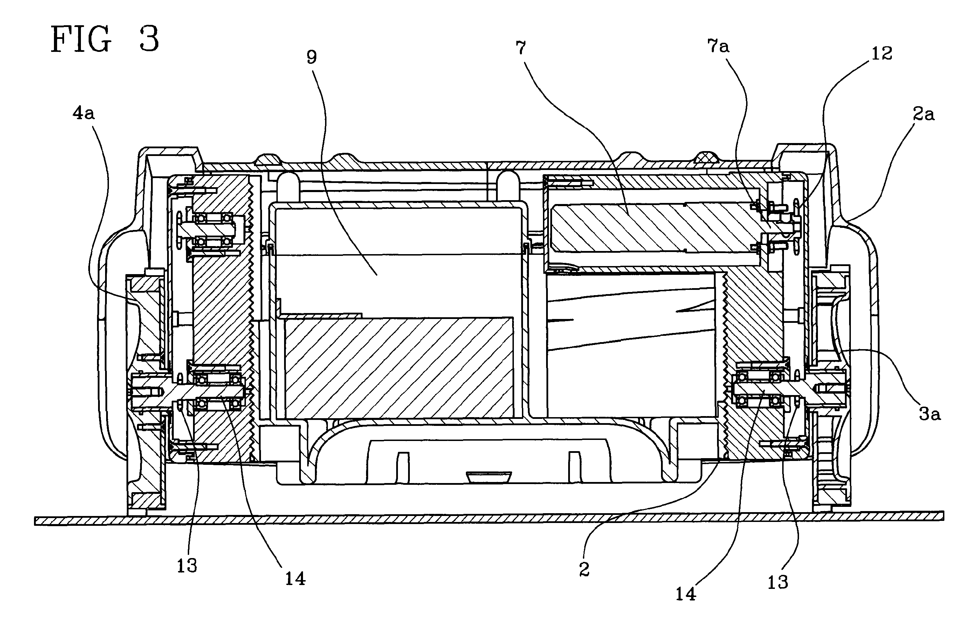

With reference to the sectional figures 3 to 5, it is to be noted that each transmission member 10, 11 is made up of a driving toothed pulley 12 which is associated with the shaft 7a, 8a of the respective motor 7, 8 and rotates about an axis parallel to the longitudinal development of said shaft 7a, 8a (as best illustrated in Fig. 3 where the first motor 7 is more clearly visible).

The transmission member also exhibits a pair of driven toothed pulleys 13, each of which is operatively connected to a respective wheel of each pair 3, 4. As illustrated in detail in Fig. 3, in which the first wheel 3a of the first pair is shown in section, each wheel is pivoted to the box-shaped body 2 by means of a respective pivot 14 which is in turn associated with rolling bearings, of known type, allowing the rotation of the wheel about the respective axis X, Y. Coaxially mounted on the pivot 14 is the said driven toothed 13 which extends along the same plane as the driving pulley 12.

The transmission member also exhibits a first ring-like closed chain 15 in mesh engagement with the driving pulley 12 and with the driven pulley 13 of one of said wheels, and a second ring-like closed chain 16 in mesh engagement with the driven pulleys 13.

In detail, as illustrated in Fig. 5 which shows more clearly the first transmission member 10, the first chain 15 is in mesh engagement with the driving pulley 12 of the first motor 7 and with the driven pulley 13 of the first wheel 3a, beneath the same motor 7. In this way, the rotation of the shaft 7a of the first motor 7 is transmitted to the first wheel 3a of the first pair 3.

Likewise, the first chain 15 of the second transmission member 11 is in mesh engagement with the driving pulley 12 of the second motor 8 and with the driven pulley 13 of the second wheel 4b beneath the same motor 8.

Moreover, the second chain 16 is in mesh engagement with both the driven pulleys 13 for transmitting the rotary motion from the motor to both said pulleys.

Preferably, the first and second transmission members 10, 11 further exhibit a tension element 17 operatively active on the respective second chains 16.

In particular, reference being made to Fig. 5, the tension element 17 is made up of an auxiliary toothed pulley 17a mounted on the slide 17b associated with the side portion 5 of the box-shaped body 2.

The slide 17 can be vertically slide close to, or away from the driven pulleys 13. In this situation, the second chain 16 of each transmission member 10, 11 results triangle-disposed between the respective driven pulleys 13 and the auxiliary pulley 17a. Advantageously, owing to the movement of slide 17b away from the driven pulleys 13, the second chain 16 is stretched out.

The lawn mower 1 also exhibits a cutting member 18 associated below with the body 2 and made to move for cutting the grass surface.

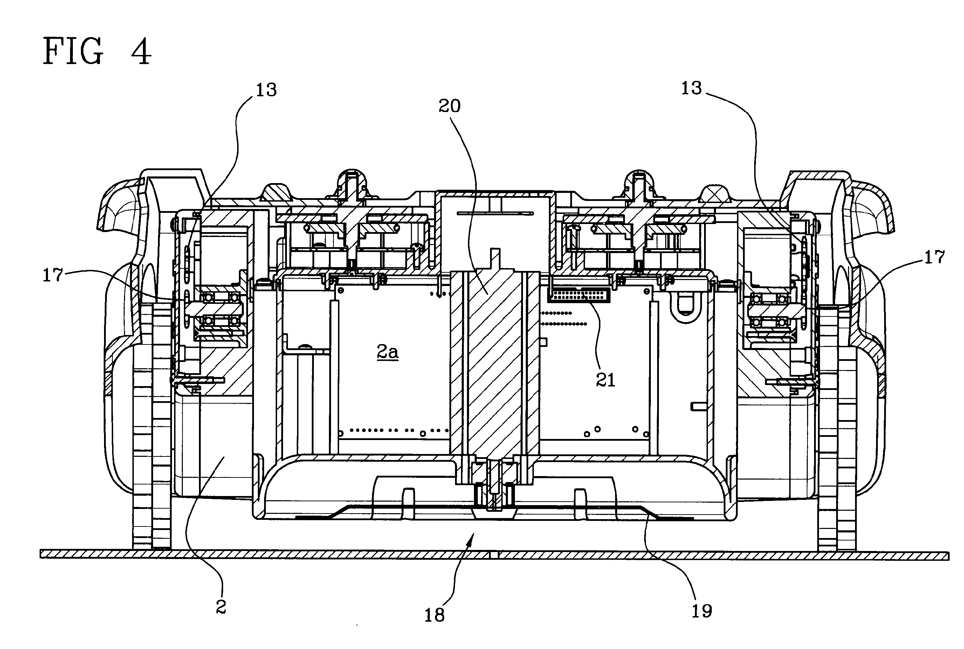

In detail, as illustrated in Fig. 4, the cutting member 18 exhibits a blade 19 disposed between said pairs of wheels and rotating about a respective axis transverse to the axis of rotation of the wheels.

The blade 19 has advantageously a substantially laminar shape and a star-like peripheral development defining a series of projecting portions able to cut the grass.

The blade 19 is driven into rotation by a respective electric motor 20 disposed in a central region of the containment chamber 2a of the box-shaped body 2.

Moreover, the lawn mower 1 is provided with a logical control unit 21 operatively associated with the first and second motors 7, 8 to regulate the same motors independently.

The logical unit 21 - of known type and widely used in the specific technical sector - makes it possible therefore to program the cutting operation to be carried out and, consequently, to control electronically the wheels-driving motors and blade 19-rotating motor.

The invention solves the problems encountered in the prior art and reaches the proposed objects.

First of all, it is to be noted that the lawn mower 1 does not have any wheel rotating about a respective vertical axis. In other words, all the wheels are driving wheels and can rotate solely about the respective horizontal axes X, Y. Consequently, owing to the drive system of the wheels, the box-shaped body 2 does not need to have a bulky construction.

It is in fact to be pointed out that in order to rotate the box-shaped body 2, the pairs 3, 4 are driven at different speeds, thereby determining the side displacement of body 2 on itself.

Moreover, it is stressed that the wheels are all motor-driven and have the same dimension. Advantageously, the lawn mower 1 can be used also on particularly loose grass surfaces. In case of inclined surfaces as well, the lawn mower results more stable, owing to the presence of four driving wheels, and able to be easily rotated by merely changing the speed or the direction of the two pairs of side wheels.

In a preferred embodiment of the invention, the lawn mower has two identical fronts, that is, it is functionally symmetrical, so that it is able to operate with less difficulty in narrow spaces, as it does not necessitate a full rotation.

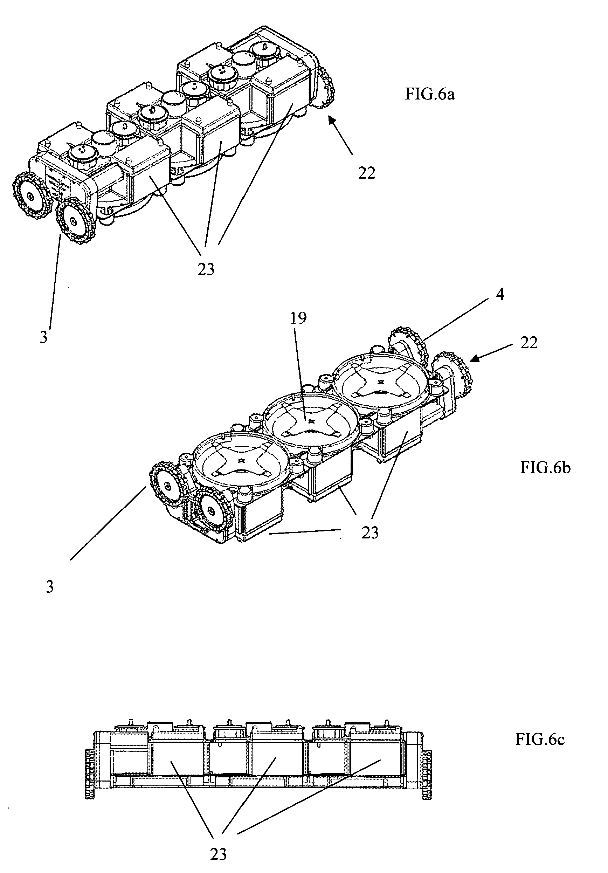

With reference to Figs. 6a-6c, the lawn mower of the invention may also be modularly constructed, that is, by providing the possibility of associating two side modular motors 22, each comprising a pair of wheels 3/4, with a plurality of cutting modules 23 release ably connected to each other by known per se means, such as restrained joints, hooks, fastening plates, and the like.

Advantageously, this solution allows achieving larger or, anyway, adaptable cutting widths by the same motor modules 22. In fact, in the illustrated example, three cutting modules 23 are shown, but it is understood that different combinations may be provided without departing from the scope of the invention.

## Claims

1. Automatic lawn mower comprising:
- a box-shaped body (2) having two pairs of wheels (3, 4) associated at the bottom with the two sides of the same body (2) to move said lawn mower along a grass surface to be cut;
- means (6) for driving said pairs of wheels (3, 4) and disposed in said box-shaped body (2); and
- a cutting member (18) associated at the bottom with said body (2) and movable for cutting said grass surface;
wherein each pair of wheels (3, 4) is associated with said driving means (6) to be motor-driven independently.

2. Lawn mower according to claim 1, **characterized in that** it comprises a first pair (3) and a second pair (4) of driving wheels, said driving means (6) exhibiting a first and second electric motors (7, 8) each of which is associated with a respective pair of wheels (3, 4).

3. Lawn mower according to any of the preceding claims, **characterized in that** each pair of wheels (3, 4) is disposed in correspondence of a respective side portion (5) of the box-shaped body (2); each pair (3, 4) having a first and second wheels (3a, 3b, 4a, 4b) rotating about respective axes (X, Y) parallel to each other.

4. Lawn mower according to any of the preceding claims, **characterized in that** said pairs of wheels (3, 4) are disposed symmetrically to each other, the first wheels (3a, 4a) of the first and second pairs (3, 4) being rota table about a first common axis (X), and the second wheels (3b, 4b) of each pair (3, 4) being rota table about a second common axis (Y).

5. Lawn mower according to any of the preceding claims, **characterized in that** said wheels (3a, 3b, 4a, 4b) exhibit equal dimensions.

6. Lawn mower according to claim 4, **characterized in that** each motor (7, 8) has a rotation shaft (7a, 8a) having longitudinal development parallel to the rotation axes (X, Y) of the wheels (3a, 3b, 4a, 4b).

7. Lawn mower according to the preceding claim, **characterized in that** the shaft (7a) of the first motor (7) is disposed above the first wheel (3a) of the first pair (3), and the shaft (8a) of the second motor (8) is disposed above the second wheel (4b) of the second pair (4).

8. Lawn mower according to claim 6 and/or 7, **characterized in that** it further comprises a first transmission member (10) associated with the first and second wheels (3a, 3b) of the first pair (3) and with the first motor (7), and a second transmission member (11) associated with the first and second wheels (4a, 4b) of the first pair (3) and with the second motor (8).

9. Lawn mower according to the preceding claim, **characterized in that** each transmission member (19, 11) comprises:
- a driving toothed pulley (12) associated with the shaft (7a, 8a) of a respective motor (7, 8) and rotating about an axis parallel to the longitudinal development of said shaft (7a, 8a);
- a pair of driven toothed pulleys (13) each of which being associated with a respective wheel (3a, 3b, 4a, 4b) of each pair;
- a first chain (15) in mesh engagement with the driving pulley (12) and with the driven pulley (13) of one of said wheels (3a, 3b, 4a, 4b); and
- a second chain (16) in mesh engagement with the driven pulleys (13).

10. Lawn mower according to the preceding claim, **characterized in that** the first chain (15) of the first transmission member (10) is in mesh engagement with the driving pulley (12) of the first motor (7) and with the driven pulley (13) of the first wheel (3a) of the first pair of wheels (3).

11. Lawn mower according to the preceding claim, **characterized in that** the first chain (15) of the second transmission member (11) is in mesh engagement with the driving pulley (12) of the second motor (8) and with the driven pulley (13) of the second wheel (3a) of the second pair of wheels (4).

12. Lawn mower according to any of the preceding claims 2 to 11, **characterized in that** it further comprises feeding means (9) of the first and second electric motors (7, 8) disposed in said box-shaped body (2).

13. Lawn mower according to the preceding claim, **characterized in that** said feeding means (9) comprise a pair of electric batteries (9a), each of which being associated with a respective motor (7, 8).

14. Lawn mower according to any of the preceding claims 2 to 13, **characterized in that** it further comprises a logical control unit (21) operatively associated with said first and second electric motors (7, 8) to regulate said motors independently of each other.

15. Lawn mower according to any of the preceding claims, **characterized in that** said cutting member (18) comprises: a blade (19) disposed between said pairs of wheels (3, 4) and rotating about a respective axis transverse to the axis of rotation of said wheels (3a, 3b, 4a, 4b); and a motor (20) associated with said blade (19) and disposed in a central region of the box-shaped body (2).

16. Lawn mower according to any of the preceding claims, **characterized in that** it is provided with two side motor modules (22) each comprising a pair of said wheels (3/4) that can be combined with one or more cutting modules (23) joined to each other and to the motor modules (22) by releasable connections.
